Europäisches Patentamt

European Patent Office

Office européen des brevets

(11) Veröffentlichungsnummer: **0 307 765**
**A1**

(12) **EUROPÄISCHE PATENTANMELDUNG**

(21) Anmeldenummer: 88114529.6

(22) Anmeldetag: 06.09.88

(51) Int. Cl.⁴: **H04B 3/23**

(30) Priorität: 18.09.87 DE 3731536

(43) Veröffentlichungstag der Anmeldung:
22.03.89 Patentblatt 89/12

(84) Benannte Vertragsstaaten:
AT BE CH DE ES FR GB GR IT LI NL SE

(71) Anmelder: **Siemens Aktiengesellschaft Berlin und München**
**Wittelsbacherplatz 2**
**D-8000 München 2(DE)**

(72) Erfinder: **von Pfeil, Dirsko, Ing.(grad.)**
**Dammstrasse 14**
**D-8021 Hohenschäftlarn(DE)**

(54) **Anordnung zum Erkennen periodischer Signale für einen Sprach-Echokompensator.**

(57) Langandauernde periodische Signale können in einem Sprach-Echokompensator nicht kompensiert werden, was bei deren Empfang nach einiger Zeit zu einer Instabilität führt. Es wird daher eine Anordnung zum Erkennen periodischer Signale wie Sinussignale aber auch Frequenzgemische benötigt, die ein Verändern oder Vergrößern des Koeffizientensatzes im adaptiven Transversalfilter des Sprach-Echokompensators verhindern kann.

Die erfindungsgemäße Erkennungsschaltung enthält einen Hilfs-Echokompensator (10), dessen Ausgang (16) mit dem Signal auf dem Empfangsweg (4), und somit dem Eingang der Erkennungsschaltung, verglichen wird. Ein Laufzeitglied (42) ist vor den adaptiven Transversalfilter (15) geschaltet, wobei der Filter (15) nicht mehr in der Lage ist, nicht periodische Signale zu kompensieren. Daraus folgt, daß nur periodische Signale zu einem geringen Wert des Ausgangssignals (16) des Hilfs-Echokompensators (10) führen, und der Komparator (25) ein Blokkiersignal abgibt.

FIG 1

## Anordnung zum Erkennen periodischer Signale für einen Sprach-Echokompensator

Die Erfindung bezieht sich auf eine Anordnung zum Erkennen periodischer Signale für einen Sprach-Echokompensator, bei dem ein einen Fehlersignaleingang und einen Blockiereingang aufweisendes erstes adaptives Transversalfilter mit seinem Eingang am Empfangsweg und mit seinem Ausgang am Minus-Eingang eines ersten Subtrahierers angeschlossen ist, der mit seinem Plus-Eingang und seinem Ausgang im Sendeweg einer digitalen Fernleitung liegt, und bei dem der Ausgang des ersten Subtrahierers mit dem Fehlersignaleingang verbunden ist.

Sprach-Echokompensatoren können lang andauernde periodische Signale nicht kompensieren und werden bei deren Empfang nach einiger Zeit instabil. Dieser Effekt entsteht dadurch, daß Signale, deren Periode wesentlich kürzer als die nachbildbare Laufzeit des Kompensators ist mehrdeutig kompensiert werden können. Dadurch vergrößern sich im adaptiven Transversalfilter Koeffizienten, deren Wirkung sich wegen der Periodizität des Eingangssignals so lange aufhebt, bis eine Begrenzung im Rechenwerk eintritt.

Zur Beseitigung dieses Fehlers wurden bereits Schaltungen realisiert, die beim Erkennen eines periodischen Signals das Verändern oder Vergrößern des Koeffizientensatzes verhindern. Bei der deutschen Veröffentlichung DE 32 35 914 T1 dient ein Filtersatz mit Amplitudenauswertung der Erkennung. Diese Lösung ist sehr aufwendig und es entstehen Schwierigkeiten an den Bandgrenzen der Einzelfilter.

Aufgabe der Erfindung ist es, eine Lösung anzugeben, die zuverlässig auf alle Arten von periodischen Signalen anspricht und dabei nicht sehr aufwendig ist.

Ausgehend von einer Anordnung der einleitend geschilderten Art wird diese Aufgabe erfindungsgemäß dadurch gelöst, daß ein Hilfskompensator mit einem zweiten Subtrahierer vorgesehen ist, dessen Plus-Eingang unmittelbar und dessen Minus-Eingang über ein zweites adaptives Transversalfiltr mit dem Empfangsweg verbunden sind, daß ein erster Gleichrichter vorgesehen ist, dessen erster Anschluß mit dem Ausgang des zweiten Subtrahierers verbunden ist, daß ein erstes Siebglied vorgesehen ist, dessen Eingang mit dem zweiten Anschluß des ersten Gleichrichters verbunden ist, daß ein zweiter Gleichrichter vorgesehen ist, dessen erster Anschluß mit dem Empfangsweg verbunden ist, daß ein zweites Siebglied vorgesehen ist, dessen Eingang mit dem zweiten Anschluß des zweiten Gleichrichters verbunden ist, daß ein Komparator vorgesehen ist, dessen erster Eingang über einen Addierer mit dem Ausgang des ersten Siebglieds, dessen zweiter Eingang mit dem Ausgang des zweiten Siebglieds und dessen Ausgang mit dem Blockiereingang verbunden sind.

Vorteilhaft ist es, wenn die Anzahl der Transversalwege bzw. der Koeffizienten dieser Wege im zweiten adaptiven Transversalfilter entsprechend der maximalen Periodenlänge des zu erkennenden periodischen Signals gewählt ist und wenn nur Transversalwege für eine Laufzeit größer Null vorgesehen sind.

Zur Erkennung periodischer Signale im Frequenzbereich von 100 - 4000 Hz sind bei einer Abtastperiode von 125 $\mu$s 80 Transversalwege erforderlich.

Um den Aufwand zu reduzieren, kann auf jeden zweiten Transversalweg verzichtet werden. Zur Erkennung periodischer Signale im Frequenzbereich von 100 - 3900 Hz sind bei einer Abtastperi ode von 250 $\mu$s nur noch 40 Transversalwege erforderlich. In diesem Fall spiegeln sich die Frequenzen des Bereichs 2000 - 4000 Hz in dem Band 0 - 2000 Hz und aus beispielsweise 3900 - 4000 Hz werden 0 - 100 Hz, so daß sich der Frequenzbereich oben einschränkt.

Vorteilhaft ist es schließlich, wenn beim Überlaufen eines Koeffizientenspeichers im zweiten adaptiven Transversalfilter ein Zurücksetzen aller Koeffizientenspeicher vorgesehen ist.

In Ausgestaltung der Erfindung kann ein Rechenwerk vorgesehen werden, daß zu den zweiunddreißig Zeitschlitzen eines Sprach-Echokompensators für ein System PCM 30 die Berechnung für 32 x 40 = 1280 Transversalwege in 250 $\mu$s durchführt. Die Zeit für die Berechnung eines Transversalweges beträgt demnach 250 $\mu$s : 1280 = 200 ns.

Anhand eines Ausführungsbeispieles wird die Erfindung nachstehend näher beschrieben.

Fig. 1 zeigt einen bekannten Sprach-Echokompensator mit einer erfindungsgemäßen Erkennungseinrichtung und

Fig. 2 zeigt einen Hilfsechokompensator für die Erkennungseinrichtung.

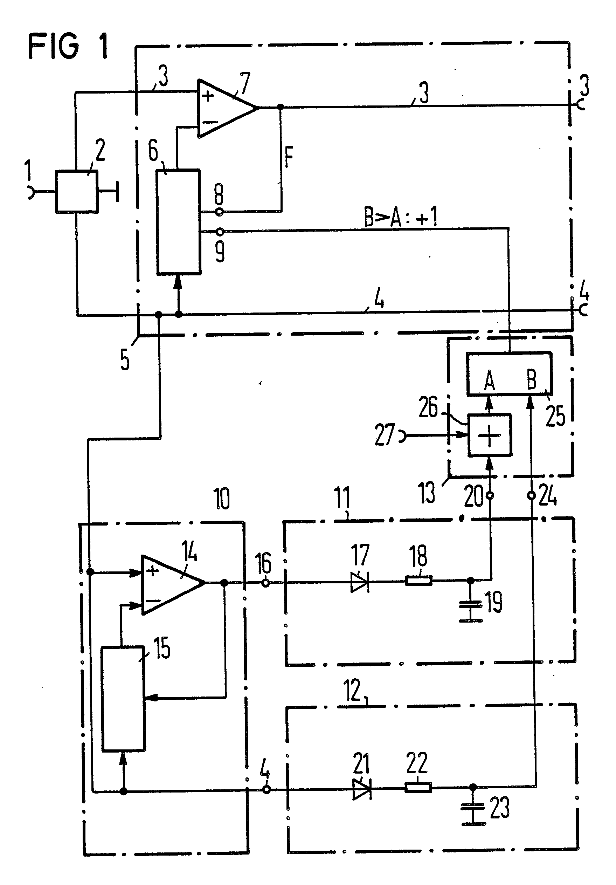

Die Figur 1 zeigt einen Sprach-Echokompensator 5 an einem Zweidraht-Vierdraht-Übergang mit einer Zweidrahtleitung 1, einer Gabel 2 und einer Fernleitung mit einem Sendeweg 3 und einem Empfangsweg 4 sowie eine Erkennungseinrichtung mit einem Hilfskompensator 10, Gleichrichtungs- und Siebschaltungen 11 und 12 und einem Amplitudenvergleicher 13.

Der Sprach-Echokompensator 5 enthält ein adaptives Transversalfilter 6 mit einem Fehlersignaleingang 8 und einem Blockiereingang 9 sowie einen Subtrahierer 7.

Der Hilfskompensator 10 enthält ein adaptives Transversalfilter 15 und einen Subtrahierer 14.

Die Gleiohrichtungs- und Siebschaltungen 11 bzw. 12 bestehen aus Gleichrichtern 17 bzw. 21, Widerständen 18 bzw. 12 und Kondensatoren 19 bzw. 23. Der Amplitudenvergleicher 13 enthält einen Komparator 25 und einen Addierer 26.

Trennen die Gabeln eines Übertragungssystems - von dem in der Figur 1 ein Ende gezeigt ist - den Hin- und Rückweg nicht vollständig, so entstehen durch die Laufzeit des Signals bedingt Echos. Von der Sendestelle gelangt ein Sprachsignal nach der Verzögerungszeit über den Hin- und Rückweg gedämpft zurück zum Sprecher. Das adaptive Transversalfilter 6 bildet den durch die Gabel 2 und die Zweidrahtleitung 1 gebildeten End-Echoweg nach, indem es, während es vom Signal auf dem Empfangsweg 4 durchlaufen wird, ein künstliches Echo erzeugt. Dieses wird dann im Subtrahierer 7 im Sendeweg 3 vom Ausgangssignal abgezogen. Eine Regelschaltung verstellt die Koeffizienten des Transversalfilters 6 so lange, bis das Ausgangssignal auf dem Sendeweg 3 weitgehend frei vom Echo ist. Über den Fehlersignaleingang 8 wird das adaptive Transversalfilter 6 vom Fehlersignal F am Ausgang des Subtrahierers 7 eingestellt. Diese Einstellung kann über den Blockiereingang 9 verlangsamt oder blockiert werden.

Der Eingang der Erkennungseinrichtung und somit der Eingang des Hilfskompensators 10 liegt am Empfangsweg 4. Sein End-Echoweg liegt zwischen dem Eingang des adaptiven Transversalfilters 15 und dem Plus-Eingang des Subtrahierers 14 und hat die Laufzeit Null, die im adaptiven Transversalfilter 15 nicht nachgebildet werden kann. Die Laufzeit des nachzubildenden End-Echowegs ist so ausgelegt, daß ein Abgleich des Hilfskompensators 10 nicht möglich ist. Periodische Signale die während dieser Laufzeit mehrfach auftreten werden aber trotzdem zumindest vorübergehend abgeglichen und damit bedämpft und zwar um so mehr je mehr periodische Anteile im Signal enthalten sind. Bei zufälligen Signalen wie Sprache oder Rauschen erfolgt dies dagegen nicht.

Die erste Gleichrichtungs- und Siebschaltung 11 richtet das Ausgangssignal des Hilfsechokompensators 10 am Anschluß 16 gleich und gibt es an ihren Ausgang 20 gesiebt ab. Die Gleichrichtungs- und Siebschaltung 12 richtet dagegen das Signal auf den Empfangsweg 4 gleich und gibt es nach erfolgter Siebung an ihren Ausgang 24 ab.

Dem Ausgangssignal der ersten Gleichrichtungs- und Siebschaltung 11 wird im Addierer 26 eine am Eingang 27 liegende konstante Spannung zugefügt um eine Schwelle zu erzeugen, über die nur eine tatsächlich auf einem periodischem Signal beruhende Spannung hinweg kommt.

Das Ausgangssignal des Addierers 26 wird im Komparator 25 mit dem Ausgangssignal der zweiten Gleichrichtungs- und Siebschaltung 12 verglichen. Ist letzteres größer als das Ausgangssignal des Addierers 26, wird die Einstellung des adaptiven Transversalfilters 6 über den Blockiereingang 9 verlangsamt oder blockiert. Überwiegt das Ausgangssignal der zweiten Gleichrichtungs- und Siebschaltung 12 das Ausgangssi- gnal des Addierers 26, dann muß im Hilfsechokompensator 10 eine Bedämpfung aufgetreten sein, was nur bei periodischen Empfangssignalen möglich ist.

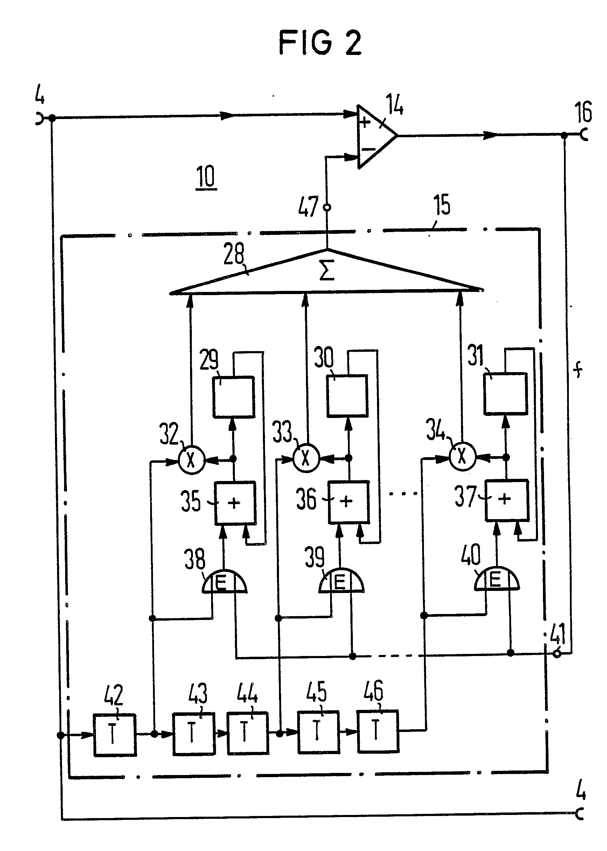

Die Figur 2 zeigt einen Hilfsechokompensator 10. Sein adaptives Transversalfilter 15 enthält einen Akkumulator 28, Koeffizientenspeicher 29 bis 31, Multiplizierer 32 bis 34, Addierer 35 bis 37, Exklusiv-ODER-Gatter 38 bis 40 und Laufzeitglieder 42 bis 46.

Beim Transversalfilter 15 wurde auf jeden zweiten Transversalweg verzichtet. Dies ist daraus zu erkennen, daß zwischen den Transversalwegen, die von den Abgriffen und dem Ende der Laufzeitkette 42 bis 46 ausgehen, jeweils zwei Verzögerungsspeicher 43, 44 und 45, 46 angeordnet sind, die eine Verdoppelung der Verzögerungszeit bewirken. Ein am Empfangsweg 4 anliegendes Signal wird in Form seines Vorzeichens bis zum ersten Transversalweg um 125 $\mu$s und anschließend jeweils um 250 $\mu$s gestaf felt verzögert an erste Eingänge der Exklusiv-ODER-Gatter 38, 39 und 40 abgegeben. Gleichzeitig gelangt das Ausgangssignal der Subtrahierschaltung 14 in Form seines Vorzeichens als Fehlersignal f über den Anschluß 41 zu den zweiten Eingängen der Exklusiv-ODER-Gatter 38, 39 und 40. Jedes von diesen gibt ein Signal ab, wenn an einem Eingang eine logische "1" und am anderen Eingang eine logische "0" anliegt. Diese Ausgangssignale werden in den Addierschaltungen 35, 36 und 37 zu den Inhalten der Koeffizientenspeicher 29, 30 und 31 addiert. Die daraus resultierenden Summensignale werden einmal in den Multiplizierern 32, 33 und 34 mit den Signalen an den Anzapfungen der Laufzeitkette 42 bis 46 multipliziert und zum anderen als neuer Inhalt in die Koeffizientenspeicher 29, 30 und 31 eingespeist. Die Ausgangssignale der Multiplizierer 32, 33 und 34 werden im Akkumulator 28 aufaddiert und über den Anschluß 47 an den Minuseingang des Subtrahierers 14 abgegeben, der dieses Ausgangssignal vom Signal auf dem Empfangsweg 4 abzieht und am Anschluß 16 abgibt.

Tritt während der Laufzeit der Laufzeitkette 42 bis 46 auf den Empfangsweg 4 ein Signal mehrfach auf, dann werden mehrere Koeffizienten berechnet, die verschiedene Größe und Vorzeichen haben unterschiedlich zu- und abnehmen und ein Ausgangssignal am Anschluß 47 hervorrufen. Bei einem Auftreten von Sprache oder Rauschen ist dies dagegen nicht der Fall.

**Ansprüche**

1. Anordnung zum Erkennen periodischer Signale für einen Sprach-Echokompensator (5), bei dem ein einen Fehlersignaleingang (8) und einen Blockiereingang (9) zur Beeinflussung der Koeffizienten aufweisendes erstes adaptives Transversalfilter (6) mit seinem Eingang am Empfangsweg (4) und mit seinem Ausgang am Minus-Eingang eines ersten Subtrahierers (7) angeschlossen ist, der mit seinem Plus-Eingang und seinem Ausgang im Sendeweg (3) einer digitalen Fernleitung (3, 4) liegt, und

bei dem der Ausgang des ersten Subtrahierers (7) mit dem Fehlersignaleingang (8) verbunden ist,
**dadurch gekennzeichnet,**

daß ein Hilfskompensator (10) mit einem zweiten Subtrahierer (14) vorgesehen ist, dessen Plus-Eingang unmittelbar und dessen Minus-Eingang über ein zweites adaptives Transversalfilter (15) mit dem Empfangsweg (4) verbunden sind,

daß ein erster Gleichrichter (17) vorgesehen ist, dessen erster Anschluß mit dem Ausgang (16) des zweiten Subtrahierers (14) verbunden ist,

daß ein erstes Siebglied (18, 19) vorgesehen ist, dessen Eingang mit dem zweiten Anschluß des ersten Gleichrichters (17) verbunden ist,

daß ein zweiter Gleichrichter (21) vorgesehen ist, dessen erster Anschluß und mit dem Empfangsweg (4) verbunden ist,

daß ein zweites Siebglied (22, 23) vorgesehen ist, dessen Eingang mit dem zweiten Anschluß des zweiten Gleichrichters (21) verbunden ist,

daß ein Komparator (25) vorgesehen ist, dessen erster Eingang über einen Addierer (26) mit dem Ausgang (20) des ersten Siebglieds (18, 19), dessen zweiter Eingang mit dem Ausgang (24) des zweiten Siebglieds (22, 23) und dessen Ausgang mit dem Blockiereingang (9) verbunden sind.

2. Anordnung nach Anspruch 1,
**dadurch gekennzeichnet,**
daß die Anzahl der Transversalwege (29, 32, 35, 38; 30, 33,36, 39; 31, 34, 37, 40) bzw. der Koeffizienten dieser Wege im zweiten adaptiven Transversalfilter (15) entsprechend der maximalen Periodenlänge des zu erkennenden periodischen Signals gewählt ist und daß nur Transversalwege für eine Laufzeit größer Null vorgesehen sind.

3. Anordnung nach Anspruch 2 zur Erkennung periodischer Signale im Frequenzbereich von 100 - 4000 Hz bei einer Abtastperiode von 125 $\mu$s,
**dadurch gekennzeichnet,**
daß achtzig Transversalwege vorgesehen sind.

4. Anordnung nach Anspruch 2 oder 3,
**dadurch gekennzeichnet,**
daß nur jeder zweite Koeffizient berechnet wird.

5. Anordnung nach Anspruch 4 zur Erkennung periodischer Signale im Frequenzbereich von 100 - 3900 Hz bei einer Abtastperiode von 250 $\mu$s,
**dadurch gekennzeichnet,**
daß vierzig Transversalwege vorgesehen sind.

6. Anordnung nach einem der Ansprüche 1 bis 5,
**dadurch gekennzeichnet,**
daß beim Überlaufen eines Koeffizientenspeichers (29, 30, 31) im zweiten adaptiven Transversalfilters (15) ein Zurücksetzen aller Koeffizientenspeicher (29, 30, 31) vorgesehen ist.

7. Anordnung nach Anspruch 6,
**dadurch gekennzeichnet,**
daß ein Rechenwerk vorgesehen ist, das die Koeffizienten im Zeitmultiplex für zweiunddreißig Kanäle berechnet.

FIG 1

# FIG 2

| | Europäisches Patentamt | **EUROPÄISCHER RECHERCHENBERICHT** | Nummer der Anmeldung |
|---|---|---|---|
| | | | EP 88 11 4529 |

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| A | WO-A-8 203 144 (WESTERN ELECTRIC)<br>* Insgesamt *<br>--- | 1 | H 04 B 3/23 |
| A,D | WO-A-8 203 145 (WESTERN ELECTRIC)<br>* Seite 8, Zeile 23 - Seite 12, Zeile 2; Figur 2 *<br>--- | 1 | |
| A | PATENT ABSTRACTS OF JAPAN, Band 10, Nr. 329 (E-452)[2385], 8. November 1986; & JP-A-61 135 239 (MATSUSHITA ELECTRIC IND. CO. LTD) 23-06-1986<br>* Zusammenfassung *<br>--- | 1 | |
| A | PATENT ABSTRACTS OF JAPAN, Band 10, Nr. 255 (E-433)[2311], 2. September 1986; & JP-A-61 81 035 (FUJITSU LTD) 24-04-1986<br>* Zusammenfassung *<br>--- | 1 | |
| A | DE-A-3 605 325 (SIEMENS)<br>* Zusammenfassung *<br>--- | 1 | |
| A | FR-A-2 515 452 (WESTERN ELECTRIC)<br>* Seite 4, Zeile 28 - Seite 5, Zeile 4 *<br>----- | 1 | **RECHERCHIERTE SACHGEBIETE (Int. Cl.4)**<br><br>H 04 B |

Der vorliegende Recherchenbericht wurde für alle Patentansprüche erstellt

| Recherchenort | Abschlußdatum der Recherche | Prüfer |
|---|---|---|
| DEN HAAG | 13-12-1988 | SNELL T. |